(19) Europäisches Patentamt / European Patent Office / Office européen des brevets

(11) EP 2 669 301 A1

(12) **EUROPEAN PATENT APPLICATION**
published in accordance with Art. 153(4) EPC

(43) Date of publication:
**04.12.2013 Bulletin 2013/49**

(21) Application number: **11842583.4**

(22) Date of filing: **24.11.2011**

(51) Int Cl.:
***C08F 10/14*** *(2006.01)* ***C08F 8/04*** *(2006.01)*
***C08F 8/50*** *(2006.01)* ***C09D 11/00*** *(2006.01)*
***C10M 107/02*** *(2006.01)* ***C10M 143/00*** *(2006.01)*
***G03G 9/08*** *(2006.01)*

(86) International application number:
**PCT/JP2011/006529**

(87) International publication number:
**WO 2012/070240 (31.05.2012 Gazette 2012/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2010 JP 2010263274**
**13.01.2011 JP 2011004564**

(71) Applicant: **Idemitsu Kosan Co., Ltd.**
**Chiyoda-ku**
**Tokyo 100-8321 (JP)**

(72) Inventors:
- **KANAMARU, Masami**
  **Ichihara-shi**
  **Chiba 299-0193 (JP)**
- **FUJIMURA, Takenori**
  **Ichihara-shi**
  **Chiba 299-0193 (JP)**
- **MINAMI, Yutaka**
  **Ichihara-shi**
  **Chiba 299-0193 (JP)**

(74) Representative: **Vossius & Partner**
**Siebertstrasse 4**
**81675 München (DE)**

(54) **a-OLEFIN POLYMER AND METHOD FOR PRODUCING SAME**

(57) An α-olefin polymer satisfying the following (1) to (4): (1) the average carbon-atom number of α-olefins constituting the polymer is 6.0 or more and 14 or less; (2) the molecular weight distribution (Mw/Mn) ≦2.0; (3) 3000≦weight average molecular weight (Mw)≦600000; and (4) $(Log_{10}Mp-Log_{10}M1)-(Log_{10}M2-Log_{10}Mp)\geqq 0.2$; wherein, in a chart measured by gel permeation chromatography, M1 is the molecular weight at the starting point of the peak, Mp is the molecular weight at the peak top; and M2 is the molecular weight at the end point of the peak.

EP 2 669 301 A1

## Description

### Technical Field

The invention relates to an α-olefin polymer, in particular to an α-olefin polymer obtained by decomposing a high-molecular α-olefin polymer, a hydrogenated product of an α-olefin polymer and a method for producing these.

### Background Art

Patent Documents 1 to 6 each discloses decomposing a poly α-olefin using a peroxide in order to improve molding property of a poly α-olefin. Many of poly α-olefins to be decomposed include a polymer of an α-olefin having a small number of carbon atoms such as 1-butene, propylene and ethylene. No examples are given for a polymer composed of mostly α-olefins having 8 or more carbon atoms.

However, conventionally, polymers to be decomposed are high-molecular polymers. Further, since they are not fully decomposed, polymers obtained after decomposition still have a high-molecular weight and have no fluidity at room temperature. Therefore, they are hard to be used as an additive for various resins or as an additive for a lubricant, or for other applications.

Most of α-olefins which are monomers of a polymer to be decomposed are α-olefins having 4 or less carbon atoms such as ethylene.

### Related Art Documents

### Patent Documents

Patent Document 1: JP-A-H08-230116
Patent Document 2: JP-A-H07-308967
Patent Document 3: JP-A-H07-33916
Patent Document 4: JP-A-H06-057728
Patent Document 5: JP-A-H04-139245
Patent Document 6: JP-A-H03-287608

### Summary of the Invention

An object of the invention is to provide an α-olefin polymer having excellent heat resistance and a hydrogenated product of an α-olefin polymer.

According to the invention, the following polymers or the like are provided.

1. An α-olefin polymer satisfying the following (1) to (4):

    (1) the average carbon-atom number of α-olefins constituting the polymer is 6.0 or more and 14 or less;
    (2) the molecular weight distribution (Mw/Mn) $\leqq$2.0;
    (3) 3000$\leqq$weight average molecular weight (Mw)$\leqq$600000; and
    (4) $(\mathrm{Log}_{10}Mp-\mathrm{Log}_{10}M1)-(\mathrm{Log}_{10}M2-\mathrm{Log}_{10}Mp)\geqq 0.2$; wherein, in a chart measured by gel permeation chromatography, M1 is the molecular weight at the starting point of the peak, Mp is the molecular weight at the peak top; and M2 is the molecular weight at the end point of the peak.

2. The polymer according to claim 1 which further satisfies the following (5):

    (5) no melting point is observed or a melting point of 100°C or less is observed in differential scanning calorimetry.

3. A hydrogenated product of an α-olefin polymer satisfying the following (1) to (4) and (6):

    (1) the average carbon-atom number of α-olefins constituting the polymer is 6.0 or more and 14 or less;
    (2) the molecular weight distribution (Mw/Mn)$\leqq$2.0;
    (3) 3000$\leqq$weight average molecular weight (Mw)$\leqq$600000;
    (4) $(\mathrm{Log}_{10}Mp-\mathrm{Log}_{10}M1) - (\mathrm{Log}_{10}M2-\mathrm{Log}_{10}Mp)\geqq 0.2$; wherein, in a chart measured by gel permeation chromatography, M1 is the molecular weight at the starting point of the peak, Mp is the molecular weight at the peak top; and M2 is the molecular weight at the end point of the peak; and
(6) bromine value≦2.0.

4. A method for producing the polymer according to 1 or 2, which comprises decomposing a raw material polymer in the presence of an organic peroxide in an inert gas atmosphere at 300°C or less, the raw material polymer being a polymer of one or more α-olefins selected from α-olefins having 3 to 32 carbon atoms, and the average carbon-atom number of the α-olefins being 6.0 or more and 14 or less.
5. A method for producing the hydrogenated product of an α-olefin polymer according to 3, which comprises:

decomposing a raw material polymer in the presence of an organic peroxide in an inert gas atmosphere at 300°C or less, the raw material polymer being a polymer of one or more α-olefins selected from α-olefins having 3 to 32 carbon atoms, and the average carbon-atom number of the α-olefins being 6.0 or more and 14 or less; and hydrogenating.

6. The production method according to 4 or 5, wherein a dilution of the organic peroxide with the raw material polymer is used.
7. A toner obtained by using the α-olefin polymer or the hydrogenated product of an α-olefin polymer according to any of 1 to 3.
8. A lubricant obtained by using the α-olefin polymer or the hydrogenated product of an α-olefin polymer according to any of 1 to 3.
9. An ink obtained by using the α-olefin polymer or the hydrogenated product of an α-olefin polymer according to any of 1 to 3.

According to the invention, an α-olefin polymer having excellent heat resistance or a hydrogenated product of an α-olefin polymer can be provided.

Mode for Carrying out the Invention

The α-olefin polymer of the invention satisfies the following (1) to (4):

(1) the average carbon-atom number of α-olefins constituting the polymer is 6.0 or more and 14 or less;
(2) the molecular weight distribution (Mw/Mn)≦2.0;
(3) 3000≦weight average molecular weight (Mw)≦600000; and
(4) $(Log_{10}Mp-Log_{10}M1)-(Log_{10}M2-Log_{10}Mp)\geqq 0.2$; wherein, in a chart measured by gel permeation chromatography, M1 is the molecular weight at the starting point of the peak, Mp is the molecular weight at the peak top; and M2 is the molecular weight at the end point of the peak.

The average carbon-atom number constituting the α-olefin polymer of the invention is 6.0 or more, e.g. 7.0 or more, exceeding 7.0 or 8.0 or more. Further, the average number of carbon atoms is 14 or less, preferably 13 or less, with 12 or less being further preferable. If the average number of carbon atoms is 6.0 or more, fluidity at room temperature can be fully ensured, and hence the α-olefin polymer of the invention can be used as an additive for an ink or a lubricant, for example. Further, if the average carbon-atom number is 14 or less, similarly, fluidity at room temperature can be fully ensured, and the α-olefin polymer of the invention can be used as an additive for an ink or a lubricant.
The molecular weight distribution (Mw/Mn) of the α-olefin polymer of the invention is 2 or less, preferably 1.6 or less, and further preferably 1.4 or less. If the molecular weight distribution is broad, sufficient performance may not be exhibited when used for a lubricant or the like.
In particular, for the use for a lubricant, decomposition reaction of molecules by shearing causes the permanent viscosity to be decreased. If the molecular weight distribution is 2 or less, stability against shearing is improved, whereby sufficient performance is exhibited when used for a lubricant.
The α-olefin polymer of the invention may contain oligomers other than polymers.
The weight average molecular weight (Mw: hereinafter often referred to as the molecular weight) is 3000 to 600000, preferably 5000 to 300000, further preferably 10000 to 200000. If the weight average molecular weight is less than 3000, lubrication performance at high temperatures is not sufficient, and if the weight average molecular weight exceeds 600000, heat resistance may be adversely affected.
When a polymer is used as the additive of a lubricant, the polymer is sheared (i.e. the molecular chain is cut) during the use, and changed into a sludge. When the polymer is changed to a sludge, the viscosity is lowered, and a necessary oil film cannot be formed. Therefore, as the additive for a lubricant, shearing stability is required.

In general, as the molecular weight becomes small, the polymer is hard to be sheared, whereby the degree of decrease in viscosity is reduced. In order to keep a viscosity necessary for use in a lubricant (viscosity index improving action), a higher molecular weight is preferable. The shearing stability and the viscosity index improving action are in a contradictory relationship relative to the molecular weight. If the molecular weight is in the range of 3000 to 600000, the shearing stability and the viscosity index will be well-balanced.
Further, since the shearing stability is high, a decrease in viscosity of an oil film associated with heat generated by shearing can be suppressed, whereby heat resistance can be improved.

As for the α-olefin polymer of the invention, the above-mentioned ($Log_{10}$Mp-$Log_{10}$M1) - ($Log_{10}$M2-$Log_{10}$Mp) is 0.2 or more, preferably 0.3 to 0.6, further preferably 0.35 to 0.6. This formula indicates that the amount of components in the higher-molecular weight side than the peak top is small. If the ($Log_{10}$Mp-$Log_{10}$M1) - ($Log_{10}$M2-$Log_{10}M_p$) is 0.2 or more, the amount of high-molecular components which are likely to be thermally decomposed is sufficiently reduced, whereby shearing stability (i.e. heat resistance) is preferably increased. Since a small amount of the high-molecular weight components is decomposed, change in the viscosity with time is preferably decreased. A ($Log_{10}$Mp-$Log_{10}$M2) - ($Log_{10}$Mp) of 0.6 or less is preferable, since a sufficient viscosity can be ensured if the polymer is used for a lubricant or the like.

The molecular distribution, the molecular weight, M1, Mp and M2 are obtained by gel permeation chromatography (GPC). Specifically, they can be measured by the methods described in the Examples.

In the α-olefin polymer of the invention, it is preferred that no melting point be confirmed by DSC (differential scanning calorimetry), or that a melting point confirmed by DSC be 100°C or less, more preferably 80°C or less, with 50°C or less being further preferable. Outside this range, the polymer becomes hard to be mixed or may be deposited when used for a composition. An α-olefin polymer of which the melting point is not confirmed by DSC is a polymer which has fluidity at room temperature and is amorphous.

The polymer of the invention can be obtained by decomposing a polymer of one or more α-olefins selected from an α-olefin having 3 to 32 carbon atoms (hereinafter referred to as the "raw material polymer").
If the raw material polymer is a polymer having less than 3 carbon atoms, i.e. an ethylene-based polymer, a decomposition reaction does not proceed. Even when a decomposition reaction proceeds, it is difficult to select and reduce only the components on the high-molecular side. In the case where a raw material polymer is an ethylene-based polymer having less than 3 carbon atoms, for example, since no tertiary carbon atoms are present, a decomposition reaction hardly proceeds, and a cross-linking reaction is promoted, and as a result, it is impossible to select and reduce only the components on the high-molecular side. If the number of carbon atoms of an α-olefin constituting the raw material polymer is 32 or less, it is possible to keep the physical properties suited to the application of a lubricant, or the like.

As examples of an α-olefin having 3 to 32 carbon atoms, propylene, 1-butene, 1-pentene, 4-methyl-1-pentene, 1-hexene, 1-octene, 1-decene, 1-dodecene, 1-tetradecene, 1-hexadecene, 1-octadecene, 1-eicosene or the like can be given. Of these, one or two or more can be used.
For example, an α-olefin (homopolymer) comprising one king of α-olefins having 6 to 16 (preferably 8 to 14) carbon atoms or an α-olefin (copolymer) of an α-olefin having 3 to 4 carbon atoms and an α-olefin having 6 to 16 carbon atoms (preferably 6 to 14, further preferably 8 to 12) carbon atoms is used. In respect of fluidity, an α-olefin (homopolymer, copolymer) comprising one kind of α-olefins having 8 to 14 carbon atoms is preferable.

The raw material polymer can be produced by using, as a catalyst, a (A) transition metal compound, a (B) solid boron compound which forms an ionic pair with the compound (A) and/or an (C) organic aluminum compound (see JP-A-2011-16893 (see Japanese Patent Application No. 2009-161752).

As the transition metal compound (A), a chelate complex, a ligand which has not been cross-linked, a metallocene complex having a cross-linked ligand or the like can be given.
As the chelate complex, N,N'-bis(2,6-diisopropylphenyl-1,2-dimethylethylenediiminonickel dibromide, N,N'-bis(2,6-diisopropylphenyl)-1,2-dimethylethylenediiminopalladium dibromide or the like can be given, for example.
As the metallocene complex having a non-cross-linked ligand, biscyclopentadienyl zirconium dichloride, bis(n-butylcyclopentadienyl)zirconium dichloride, bis(pentamethylcyclopentadienyl)zirconium dichloride, bisindenylzirconium dichloride can be given, for example.
Due to its high polymerization activity, a metallocene complex in which ligands form a cross-linking structure through a cross-linking group is preferable. A singly cross-linked metallocene complex and a double cross-linked metallocene complex are more preferable, with a double cross-linked metallocene complex being most preferable.

As examples of the singly cross-linked metallocene complex, dimethylsilylene(tetramethylcyclopentadienyl)(3-tert-butyl-5-methyl-2-phenoxy) zirconium dichloride, dimethylsilylene(tetramethylcyclopentadienyl)(tert-butylamide)zirconium dichloride, dimethylsilylenebis(2-methyl-4,5-benzoindenyl)zirconium dichloride, dimethylsilylenebis(2-methyl-4-phenylindenyl)zirconium dichloride, dimethylsilylenebis(2-methyl-4-naphthylindenyl)zirconium dichloride, dimethylsilylenebis(2-methylindenyl)zirconium dichloride, ethylenebis(2-methylindenyl)zirconium dichloride or like can be given.

As the double-cross linked metallocene complex, a double-cross linked metallocene complex represented by the following formula (I) can be given.

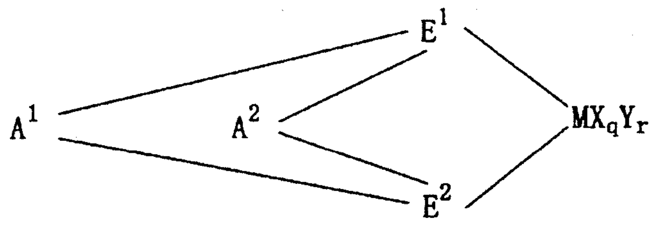

・・・(I)

wherein M is a metal element belonging to the 3rd to 10th group of the periodic table or of the lanthanoid series; $E^1$ and $E^2$ are independently a ligand selected from a substituted cyclopentadienyl group, an indenyl group, a substituted indenyl group, a heterocyclopentadienyl group, a substituted heterocyclopentadienyl group, an amide group, a phosphide group, a hydrocarbon group and a silicon-containing group, and form a cross-linking structure through $A^1$ and $A^2$; $E^1$ and $E^2$ may be the same or different; X is a σ-bondable ligand; if plural Xs are present, the plural Xs may the same or different, and may be cross-linked with other X, $E^1$, $E^2$ or Y; Y is a Lewis base, and when plural Ys are present, the plural Ys may be the same or different, and may be cross-linked with other Y, $E^1$, $E^2$ or X; $A^1$ and $A^2$ are independently a divalent cross-linking group which binds two ligands and are independently a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$ or $AlR^1-$, wherein $R^1$ is a hydrogen atom, a halogen atom, a hydrocarbon group having 1 to 20 carbon atoms or a halogen-containing hydrocarbon group having 1 to 20 carbon atoms; $A^1$ and $A^2$ may be the same or different; q is an integer of 1 to 5 and represents [(atomic value of M)-2]; and r is an integer of 0 to 3.

M is preferably a metal element belonging to the 4th group of the periodic table. Of these, titanium, zirconium and hafnium are preferable.

It is preferred that $E^1$ and $E^2$ be independently a substituted cyclopentadienyl group, an indenyl group and a substituted indenyl group.

Specific examples of X include a halogen atom, a hydrocarbon group having 1 to 20 carbon atoms, an alkoxy group having 1 to 20 carbon atoms, an aryloxy group having 6 to 20 carbon atoms, an amide group having 1 to 20 carbon atoms, a silicon-containing group having 1 to 20 carbon atoms, a phosphide group having 1 to 20 carbon atoms, a sulfide group having 1 to 20 carbon atoms, an acyl group having 1 to 20 carbon atoms, or the like.

Specific examples of Y include amines, ethers, phosphines, thioethers or the like.

As $A^1$ and $A^2$, one represented by the following general formula can be given.

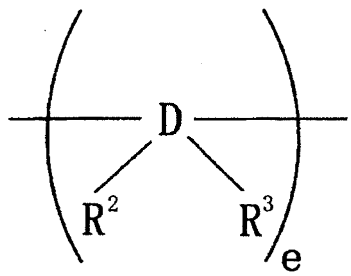

D is carbon, silicon or tin, $R^2$ and $R^3$ are independently a hydrogen atom or a hydrocarbon group having 1 to 20 carbon atoms which may be the same or different. They may be bonded to form a ring structure e is an integer of 1 to 4.

An ethylene group, an isopropylidene group and a dimethylsilylene group are preferable.

Of the double-cross-linked metallocene complex represented by the formula (I), a metallocene complex having a double-cross-linked biscyclopentadienyl derivative represented by the formula (II) as a ligand is preferable.

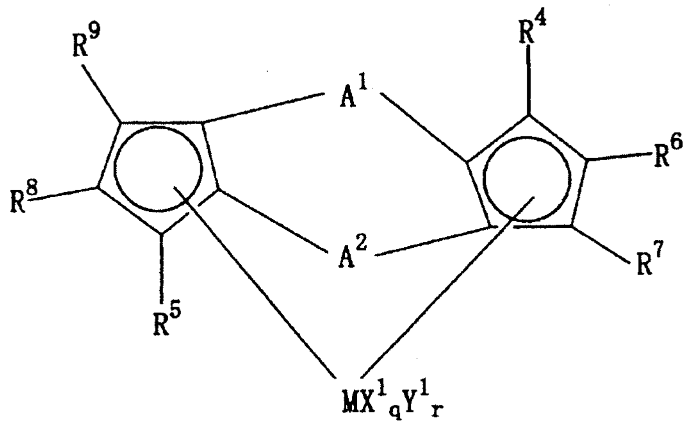

· · · (II)

wherein in the formula (II), M, $A^1$, $A^2$, $X^1$, $Y^1$, q and r are as defined above.
$R^4$ to $R^9$ are independently a hydrogen atom, a halogen atom, a hydrocarbon group having 1 to 20 carbon atoms, a halogen-containing hydrocarbon group having 1 to 20 carbon atoms, a silicon-containing group or a hetero atom-containing group, provided that at least one of them is not a hydrogen atom.
$R^4$ to $R^9$ may be the same or different, and adjacent groups may be bonded to form a ring. It is preferred that $R^6$ and $R^7$ form a ring and that $R^8$ and $R^9$ form a ring.
As $R^4$ and $R^5$, a group having a hetero atom such as oxygen, halogen and silicon is preferable.
As the metallocene complex having this double-cross-linked biscyclopentadienyl derivative as a ligand, one containing silicon as the cross-linking group between the ligands is preferable.

As the organic boron compound as the component (B), a coordinated complex compound formed of an anion and a cation in which a plurality of groups are bonded to a metal can be given.
As the coordinated complex compound comprising an anion and a cation in which a plurality of groups bonded to a metal, various compounds can be used. For example, compounds represented by general formula (III) or (IV) can advantageously be used.

$$([L^1\text{-}H]^{s+})_t([BZ^1Z^2Z^3Z^4]^-)_1 \qquad (III)$$

$$([L^2]^{s+})_t([BZ^1Z^2Z^3Z^4]^-)_1 \qquad (IV)$$

wherein in the formula (III) or (IV), $L^2$ represents $M^1$, $R^{10}R^{11}M^2$ or $R^{12}{}_3C$, which are described below, $L^1$ represents a Lewis base; $M^1$ represents a metal selected from Groups 1 and 8 to 12 of the Periodic Table; $M^2$ represents a metal selected from Groups 8 to 10 of the Periodic Table; $Z^1$ to $Z^4$ each represent a hydrogen atom, a dialkylamino group, an alkoxy group, an aryloxy group, an alkyl group having 1 to 20 carbon atoms, an aryl group having 6 to 20 carbon atoms, an alkylaryl group, or an arylalkyl group, a substituted alkyl group, an organometalloid group, or a halogen atom;
$R^{10}$ and $R^{11}$ each represent a cyclopentadienyl group, a substituted cyclopentadienyl group, an indenyl group or a fluorenyl group; $R^{12}$ represents an alkyl group;
s represents the ionic valence of $L^1$-H or $L^2$ which is an integer of 1 to 7; and t is an integer of 1 or more; and $l = t \times s$).

Specific examples of $M^1$ include elements such as Ag, Cu, Na and Li or the like. Specific examples of $M^2$ include Fe, Co, Ni or the like.
Specific examples of $Z^1$ to $Z^4$ include a dialkylamino group such as a dimethylamino group and a diethylamino group; an alkoxy group such as a methoxy group, an ethoxy group and an n-butoxy group; an aryloxy group such as a phenoxy group, a 2,6-dimethylphenoxy group and an naphthyloxy group; an alkyl group having 1 to 20 carbon atoms such as a methyl group, an ethyl group, an n-propyl group, an isopropyl group, an n-butyl group, an n-octyl group and a 2-ethylhexyl group; an aryl group, an alkylaryl group and an arylalkyl group having 6 to 20 carbon atoms such as a phenyl group, a p-tolyl group, a benzyl group, a pentafluorophenyl group, a 3,5-di(trifluoromethyl)phenyl group, a 4-tertiarybutylphenyl group, a 2,6-dimethylphenyl group, a 3,5-dimethylphenyl group, a 2,4-dimethylphenyl group and a 1,2-dimethylphenyl group; a halogen such as F, Cl, Br, and I; and an organometalloid group such as a tetramethylantimony group, a trimethylsilyl group, a trimethylgermyl group, a diphenylarsine group, a dicyclohexylantimony group and a diphenylboron group.
Specific examples of the substituted cyclopentadienyl group represented by $R^{10}$ and $R^{11}$ include a methylcyclopentadienyl group, a butylcyclopentadienyl group and a pentamethylcyclopentadienyl group.

Specific examples of the anion having a plurality of groups bonded to a metal include $B(C_6F_5)_4^-$, $B(C_6HF_4)_4^-$, $B(C_6H_2F_3)_4^-$, $B(C_6H_3F_2)_4^-$, $B(C_6H_4F)_4^-$, $B(C_6CF_3F_4)_4^-$, $B(C_6H_5)_4^-$, and $BF_4^-$.

As the metal cation, $Cp_2Fe^+$, $(MeCp)_2Fe^+$, $(tBuCp)_2Fe^+$, $(Me_2Cp)_2Fe^+$, $(Me_3Cp)_2Fe^+$, $(Me_4Cp)_2Fe^+$, $(Me_5Cp)_2Fe^+$, $Ag^+$, $Na^+$, $Li^+$ or the like can be given. Examples of other cations include a nitrogen-containing compound such as pyridinium, 2,4-dinitro-N,N-diethylanillium, diphenylammonium, p-nitroanilinium, 2,5-dichloroaniline, p-nitro-N, N-dimethylanilinium, qunolinium, N,N-dimethylanilinium, and N,N-diethylanilinium, carbenium compounds such as triphenylcarbenium, tri(4-methylphenyl)carbenium, tri(4-methoxypheny)carbenium, alkylphosphonium ions such as $CH_3PH_3^+$, $C_2H_5PH_3^+$, $C_3H_7PH_3^+$, $(CH_3)_2PH_2^+$, $(C_2H_5)_2PH_2^+$, $(C_3H_7)_2PH_2^+$, $(CH_3)_3PH^+$, $(C_2H_5)_3PH^+$, $(C_3H_7)_3PH^+$, $(CF_3)_3PH^+$, $(CH_3)_4P^+$, $(C_2H_5)_4P^+$, $(C_3H_7)_4P^+$ and arylphosphonium ions such as $C_6H_5PH_3^+$, $(C_6H_5)_2PH_2^+$, $(C_6H_5)_3PH^+$, $(C_6H_5)_4P^+$, $(C_2H_5)_2(C_6H_5)PH^+$, $(CH_3)(C_6H_5)PH_2^+$, $(CH_3)_2(C_6H_5)PH^+$ and $(C_2H_5)_2(C_6H_5)_2P^+$.

As the preferable coordinate complex compound, one composed of a non-coordinating anion and a substituted triaryl carbenium can be given. As the non-coordinating anion, one represented by the following general formula (V) can be given.

$$(BZ^1Z^2Z^3Z^4)^- \qquad (V)$$

in the formula, $Z^1$ to $Z^4$ are independently a hydrogen atom, a dialkylamino group, an alkoxy group, an aryloxy group, an alkyl group having 1 to 20 carbon atoms, an aryl group (including a halogen-substituted aryl group) having 6 to 20 carbon atoms, an alkylaryl group, an arylalkyl group, a substituted alkyl group and an organometalloidal group or a halogen atom.

On the other hand, as the substituted triaryl carbenium, one represented by the following formula (VI) can be given, for example.

$$[CR^{13}R^{14}R^{15}]^+ \qquad (VI)$$

In the formula (VI), $R^{13}$, $R^{14}$ and $R^{15}$ are independently an aryl group such as a phenyl group, a substituted phenyl group, a naphthyl group and an anthracenyl group, which may be the same or different. At least one of them is a substituted phenyl group, a naphthyl group or an anthracenyl group.

Specific examples of the non-coordinating anion represented by the general formula (V) include tetra(fluorophenyl)borate, tetrakis(difluorophenyl)borate, tetrakis(trifluorophenyl)borate, tetrakis(tetrafluorophenyl)borate, tetrakis (pentafluorophenyl)borate, tetrakis(trifluoromethylphenyl)borate, tetra(toluyl) borate, tetra(xylyl)borate, (triphenyl, pentafluorophenyl)borate, [tris(pentafluorophenyl), phenyl]borate and tridecahydride-7,8-dicarbaundecaborate.

Specific examples of the substituted triarylcarbenium represented by the general formula (VI) include tri(toluyl) carbenium, tri(methoxyphenyl)carbenium, tri(chlorophenyl)carbenium, tri(fluorophenyl)carbenium, tri(xylyl)carbenium, [di(toluyl), phenyl]carbenium, [di(methoxyphenyl), phenyl]carbenium, [di(chlorophenyl), phenyl]carbenium, [toluyl, di (phenyl)]carbenium, [methoxyphenyl, di(phenyl)]carbenium, and [chlorophenyl, di(phenyl)]carbenium.

As the organic aluminum compound (C), a compound represented by the general formula (VIII) can be given.

$$R^{20}{}_vAlJ_{3-v} \qquad (VIII)$$

in the formula, $R^{20}$ is an alkyl group having 1 to 10 carbon atoms, J is a hydrogen atom, an alkoxy group having 1 to 20 carbon atoms, an aryl group having 6 to 20 carbon atoms or a halogen atom; and v is an integer of 1 to 3.

As the organic aluminum compound as the component (C), a chain-like aluminoxane represented by the general formula (IX) and a cyclic aluminoxane represented by the general formula (X) can be given.

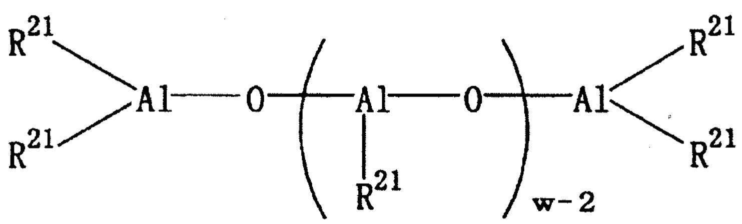

・・・(IX)

wherein $R^{21}$ is a hydrocarbon group having 1 to 20, preferably 1 to 12 carbon atoms such as an alkyl group, an alkenyl group, an aryl group and an arylalkyl group or a halogen atom; and w is the mean polymerization degree, which is normally an integer of 2 to 50, preferably 2 to 40. $R^{21}$s may be the same or different.

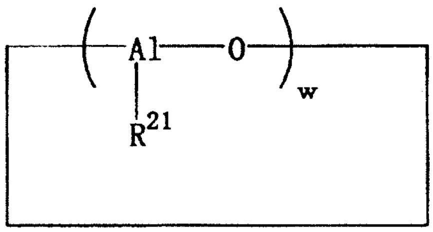

・・・(X)

wherein $R^{21}$ and w are as defined in the above general formula (IX).

The raw material polymer has an isotactic index [mm] of preferably 10 to 85 mol%, more preferably 20 to 80 mol% or less, further preferably 30 to 75 mol% or less. A larger [mm] value indicates a higher isotacticity. If the value of [mm] is too low, syndiotacticity becomes strong, and crystallinity becomes high. As a result, the polymer cannot be molten at low temperatures and hence becomes hard to be decomposed. If the value is too high, isotacticity becomes strong, and crystallinity is increased. As a result, the polymer cannot be molten at low temperatures and hence becomes hard to be decomposed. The value [mm] can be obtained by a method described in the Examples.

Since the polymer of the invention has excellent heat resistance, it can be used as an additive for toner, lubricant, ink, or the like.

More specifically, the polymer of the invention can be produced by decomposing the above-mentioned raw material polymer in the presence of an organic peroxide in an inert gas atmosphere at 300°C or less. According to this method, gel is hardly produced, and a polymer having excellent heat resistance can be produced efficiently.

As the inert gas, a gas having a low reactivity may be used. For example, a nitrogen gas and an argon gas can be preferably used.

When decomposition is conducted in the presence of an organic peroxide, since an organic peroxide is a radical decomposing agent, an oxidation reaction of the raw material polymer proceeds if oxygen is present in a reaction field. As a result, a reaction is required to be conducted in the atmosphere of an inert gas.

The molecular weight distribution (Mw/Mn) of the raw material polymer is preferably 4 or less, more preferably 3 or less, with 2.5 or less being further preferable. If the molecular weight distribution is broad, gas components are generated, whereby the yield at the time of decomposition may be lowered.

In the production of a raw material polymer, by allowing the polymerization conditions to be constant, by using a uniform catalyst such as metallocene or the like, it is possible to allow the molecular weight distribution of the raw material polymer to be narrow.

Further, the molecular weight of the raw material polymer can be adjusted by activating the chain transfer reaction by increasing the polymerization temperature, increasing the hydrogen concentration or the like" by selecting an optimum catalyst or the like.

As mentioned above, by adjusting the molecular weight distribution or the molecular weight of the raw material polymer, the molecular weight distribution and the molecular weight of the decomposed polymer can be adjusted easily. In addition, at the time of decomposition, by incorporating a decomposition agent in a divided manner for a long period of time such that the decomposition agent can be dispersed in the raw material polymer as uniform as possible, the raw material polymer can be decomposed uniformly to allow the molecular weight distribution to be narrow.

Further, by increasing the ratio of heat decomposition by increasing the reaction temperature, increasing the added amount of the decomposition agent or the like, the above-mentioned value of $(Log_{10}Mp-Log_{10}M1)-(Log_{10}M2-Log_{10}Mp)$ can be 0.2 or more.

In addition, by selecting a catalyst which lowers the regularity of the polymer, by allowing a plurality of monomers to be copolymerized or by other methods, it is possible to allow the melting point to be 100°C or less or to be not observed.

The decomposition reaction (radical decomposition) is normally conducted at 300°C or less.

The decomposition temperature is preferably 100 to 290°C, more preferably 150 to 280°C. If the decomposition temperature is too low, the decomposition reaction may not proceed. On the other hand, if the decomposition temperature is too high, decomposition proceeds vigorously. As a result, decomposition may be completed before an organic peroxide is uniformly dispersed in a molten polymer by stirring, leading to broadening of the molecular weight distribution.

As specific examples of the organic peroxide, the following compounds can be given: diisobutylylperoxide, cumylperoxyneodecanoate, di-n-propylperoxydicarbonate, diisopropylperoxydicarbonate, di-sec-butylperoxydicarbonate, 1,1,3,3-tetramethylbutylperoxyneodecanoate, di(4-t-butylcyclohexyl)peroxydicarbonate, di(2-ethylhexyl)peroxydicarbonate, t-hexylperoxyneodecanoate, t-butylperoxyneoheptanoate, t-hexylperoxypivalate, t-butylperoxypivalate, di (3,5,5-trimethylhexanoyl)peroxide, dilaurylperoxide, 1,1,3,3-tetramethylbutylperoxy-2-ethylhexanoate, 2,5-dimethyl-2,5-di(2-ethylhexanoylperoxy)hexane, t-hexylperoxy-2-ethylhexanoate, di(4-methylbenzoyl)peroxide, t-butylperoxy-2-ethylhexanoate, di(3-methylbenzoyl)peroxide, dibenzoylperoxide, 1,1-di(t-butylperoxy)-2-methylcyclohexane, 1,1-di(t-hexylpropylperoxy)-3,3,5-trimethylcyclohexane, 1,1-di(t-hexylperoxy)cyclohexane, 1,1-di(t-butylperoxy)cyclohexane,

2,2-di(4,4-di-(t-butylperoxy)cyclohexyl)propane, t-hexylperoxyisopropyl monocarbonate, t-butylperoxymaleate, t-butylperoxy-3,5,5-trimethylhexanate, t-butylperoxylaurate, t-butylperoxyisopropyl monocarbonate, t-butylperoxy-2-ethylhexylmonocarbonate, t-hexylperoxybenzoate, 3,5-di-methyl-2,5-di(benzoylperoxy)hexane, t-butylperoxyacetate, 2,2-di-(t-butylperoxy)butane, t-butylperoxybenzoate, n-butyl-4,4-di-(t-butylperoxy)varate, di(2-t-butylperoxyisopropyl)benzoate, dicumylperoxide, di-t-hexylperoxide, 2,5-dimethyl-2,5-di(t-butylperoxy)hexane, t-butylcumylperoxide, di-t-butylperoxide, p-Menthanshydroperoxide, 2,5-dimethyl-2,5-di(t-butylperoxy)hexyne-3, diisopropylbenzenehydroperoxide, 1,1,3,3-tetramethylbutyl hydroperoxide, cumen hydroperoxide and t-butylhydroperoxide.

The amount of the organic peroxide to be added is preferably 0.05 to 10 wt%, more preferably 0.2 to 5 wt%, and further preferably 0.3 to 3 wt%, relative to the raw material polymer. If the added amount is less than 0.05 wt%, the decomposition reaction speed becomes slow to deteriorate the production efficiency. On the other hand, if the added amount exceeds 10.0 wt%, an odor derived from the decomposition of an organic peroxide may be problematic.

The decomposition reaction takes for 30 seconds to 10 hours, for example. Preferably, the decomposition takes for 1 minute to 2 hours, further preferably 2 minutes to 1 hour. If the decomposition time is less than 30 seconds, not only the decomposition reaction may proceed sufficiently, but also a large amount of un-decomposed organic peroxide may remain. On the other hand, if the decomposition time exceeds 10 hours, a cross-linking reaction as a side reaction may proceed or the resulting polyolefin may turn yellow.

The decomposition reaction can be conducted by the decomposition by the batch method or the decomposition by the melt continuation method.

If the decomposition reaction is conducted by the batch method, an inert gas such as nitrogen and argon is charged in a stainless-made reaction vessel provided with a stirrer, and the raw material polymer is put and molten by heating. To the molten raw material polymer, an organic peroxide is added dropwise, and the mixture is heated for a prescribed period of time at a prescribed temperature, whereby the decomposition reaction can be conducted.

It suffices that the above-mentioned dropwise addition of an organic peroxide be conducted within the above-mentioned range of decomposition time. The dropwise addition may be conducted continuously or in a divided manner. Further, the reaction time after the completion of the dropwise addition may be within the above-mentioned reaction time. The organic peroxide may be added dropwise in the form of a dispersion obtained by dispersing in advance to the raw material polymer at a high concentration or may be added dropwise in the form of a solution obtained by adding to a solvent.

Addition of an organic peroxide after diluting with the raw material polymer is preferable, since an increase in pressure by vigorous gasification of a diluting agent can be eliminated, and as a result, removal of a diluting agent becomes unnecessary, and decomposition of the raw material polymer is promoted. In this case, the dilution ratio is normally 1.1 times to 20 times, preferably 1.5 times to 15 times, further preferably 2 times to 10 times. If the dilution rate is lower than this, the frequency of the cross-linking reaction is increased, and if the dilution rate is higher than this, the efficiency of the decomposition reaction may be lowered.

Further, a solvent may be used as a diluting agent. The amount of the solvent to be used is 0 to 1 time (volume ratio) relative to the polymer to be decomposed. If the amount of the solvent is larger than this, the efficiency of the decomposition reaction may be lowered.

The above-mentioned solvent is preferably a hydrocarbon-based solvent. Specific examples thereof include an aliphatic hydrocarbon such as heptane, octane, decane, dodecane, tetradecane, hexadecane and nanodecane; an alicyclic hydrocarbon such as methylcyclopentane, cyclohexane, methylcyclohexane, cyclooctane and cyclododecane; and an aromatic hydrocarbon such as benzene, toluene, xylene, ethylbenzene and trimethylbenzene. Of these solvents, a solvent having a boiling point of 100°C or higher is preferable.

At the time of decomposition, the raw material polymer may be dissolved in a solvent. The decomposition temperature at which the raw material polymer is dissolved and decomposed in a solvent is normally 100 to 300°C, preferably 150 to 260°C, with 160 to 250°C being further preferable.

If the decomposition reaction is conducted by the melt continuation method, the reaction time in terms of mean residence time is 20 seconds to 10 minutes, for example, preferably 30 seconds to 6 minutes, with 40 seconds to 3 minutes being further preferable. As compared with the batch method, the melt continuation method can attain a good mixing state, whereby the reaction time can be shortened.

As for the apparatus, an uniaxial or biaxial melt kneader can be used. A kneader which has an injection port in the midway of a barrel, enables deareration under reduced pressure, and has an L/D (effective length of screw/diameter of screw) is 10 or larger is preferable.

The decomposition reaction by the melt continuation method can be applied to a method in which the organic peroxide is impregnated in the raw material polymer or to a method in which the raw material polymer and the organic peroxide are separately supplied and mixed.

Impregnation of the organic peroxide in the raw material polymer can be specifically conducted as follows. A specific amount of the organic peroxide is added to the raw material polymer in the presence of an inert gas such as nitrogen, followed by stirring at room temperature to 40°C, whereby the organic peroxide can be absorbed and impregnated uniformly in raw material pellets. By decomposing the raw material polymer (impregnated pellets) in which the

resulting organic peroxide is impregnated by melt kneading or by adding the impregnated pellets to the raw material polymer as a master batch and decomposing them, a terminally unsaturated polyolefin can be obtained.

If the organic peroxide is a solid or has a low solubility relative to the raw material polymer, the organic peroxide may be absorbed and impregnated in the raw material polymer as a solution obtained by dissolving the organic peroxide is dissolved in a hydrocarbon solvent in advance.

When mixing is conducted by supplying the raw material polymer and the organic peroxide separately, the raw material polymer and the organic peroxide are supplied to a hopper part of an extruder at a constant flow rate or the organic peroxide is supplied at a constant flow rate to the midway of the barrel.

The one-minute half life temperature of the organic peroxide is preferably 100°C or higher, more preferably 120°C or higher, with 130°C or higher being further preferable. If the temperature is below this range, gel may be generated in a polymer to be decomposed.

After the decomposition, in order to reduce the terminal double bond, thereby to further increase the oxygen resistance performance and heat resistance, a hydrogenation reaction may be conducted (also referred to as "hydrogenate"). By allowing the polymer to be a complete saturated body by a hydrogenation reaction, the heat resistance can be further improved, whereby a hydrogenated product of an α-olefin polymer having excellent heat resistance (the object of the invention) can be provided.

The hydrogenated product of an α-olefin polymer of the invention satisfies the following (1') to (4') and (6):

(1') the average carbon-atom number of α-olefins constituting the polymer is 6.0 or more and 14 or less;
(2') the molecular weight distribution (Mw/Mn)≦2.0;
(3') 3000≦weight average molecular weight (Mw)≦600000;
(4') $(\mathrm{Log}_{10}\mathrm{Mp}-\mathrm{Log}_{10}\mathrm{M1}) - (\mathrm{Log}_{10}\mathrm{M2}-\mathrm{Log}_{10}\mathrm{Mp}) \geqq 0.2$; wherein, in a chart measured by gel permeation chromatography, M1 is the molecular weight at the starting point of the peak, Mp is the molecular weight at the peak top; and M2 is the molecular weight at the end point of the peak; and
(6) bromine value≦2.0.

(1') to (4') as mentioned above are the same as (1) to (4) of the above-mentioned α-olefin, and preferable specific examples are also the same.

In (6) above, if the bromine value is 2.0 or less, the amount of the unsaturated bond is small, and the polymer has excellent heat stability and sharing stability. If the bromine value is 2.0 or less, it means that the amount of the unsaturated bond in the polymer is small. Such a small bromine value is preferable since heat resistance and shearing stability are further improved.

The hydrogenated product of the α-olefin polymer can be produced by the following method. A raw material polymer is decomposed in the presence of an organic peroxide in an inert gas atmosphere at 300°C or less. The raw material polymer is a polymer of one or more α-olefins selected from α-olefins having 3 to 32 carbon atoms, and the average carbon-atom number of the α-olefins being 6.0 or more and 14 or less. After the decomposition, hydrogenation is conducted.

No particular restrictions are imposed on the hydrogenation method, and known methods can be used. For example, a method described in WO2010/074233 can be used.

## EXAMPLES

In the Examples, $SiMe_2$ means "dimethylsilylene" and $SiMe_2SiMe_2$ means "tetramethyldisilylene".

The method for properties in the Examples and Comparative Examples are described below.

[Molecular weight, molecular weight distribution]

The molecular weight and the molecular weight distribution were measured by means of the following apparatuses under the following conditions:

<GPC measuring apparatus>

Column: TOSOGMHHR-H(S)HT
Detector: WATERS150C, RI detector for liquid chromatogram
<Measuring conditions>
Solvent: 1,2,4-trichlorobenzene

Measuring temperature: 145°C
Flow rate: 1.0 ml/min
Sample concentration: 2.2 mg/ml
Injected amount: 160 μl
Calibration line: Universal Calibration
Analysis program: HT-GPC (Ver. 1.0)

[Average carbon-atom number]

The average carbon-atom number was obtained by the following formula.

$$(2(n-3)+3)/3=a/b$$

wherein n is the average carbon-atom number, a is the integrated value of a $^1$H-NMR spectrum (tetramethylsilane standard) at 0.95 to 1.60 ppm and b is the integrated value of a $^1$H-NMR spectrum (tetramethylsilane standard) at 0.89 ppm.
The $^1$H-NMR spectrum was measured by means of the following apparatus and under the following conditions.

Apparatus: EX-400, manufactured by JEOL Ltd.
Measurement temperature: 130°C
Pulse width: 45°
Number of integration times: 16
Solvent: A 90:10 (volume ratio) mixed solvent of 1,2,4-trichlorobenzene and heavy benzene

[Differential scanning calorimetry]

The melting point of the polymer was measured by means of the following apparatus under the following conditions:

By means of a differential scanning calorimeter (DSC-7, manufactured by PerkinElmer Co., Ltd.), 10 mg of the samples was retained at -10°C for 5 minutes in the atmosphere of nitrogen. After that, the temperature of the sample was raised at 10°C/min, and the top of a peak which was observed at the highest temperature side of the melting endothermic curve was taken as the melting point.

[Isotactic index]

Only the tacticity of an α-olefin having 6 or more carbon atoms was evaluated.
The isotactic index value [mm] was obtained in accordance with a method proposed in "Macromolecules, 24, 2334 (1991)" by T. Asakura, M. Demura and Y. Nishiyama.
That is, the [mm] was obtained by, in the $^{13}$CNMR spectrum, utilizing a fact that a $CH_2$ carbon at the α-position of the side chain derived from a higher α-olefin is cleaved due to the difference in tacticity.
The $^{13}$CNMR was measured by means of the following apparatus under the following conditions.

Apparatus: EX-400, manufactured by JEOL Ltd.
Measurement temperature: 130°C
Pulse width: 45°
Number of integration: 1,000 times
Solvent: A 90:10 (volume ratio) of a mixed solvent of 1,2,4-trichlorobenzene and heavy benzene

The [mm] was obtained as follows:

Six (6) large absorption peaks based on a mixed solvent were observed in a range from 127 to 135 ppm. Of these peaks, the value of a peak which was at the fourth from the low magnetic field side was taken as 131.1 ppm, and taken as the standard of a chemical shift. At this time, an absorption peak based on a $CH_2$ carbon of the α-position of the side chain was observed in the vicinity of 34 to 37 ppm. At this time, the [mm] (mol%) was obtained by using the following formula:

$$[mm] = \frac{\text{Integrated intensity of 36.2 to 35.3 ppm}}{\text{Integrated intensity of 36.2 to 34.5 ppm}} \times 100$$

Production Example 1

[Synthesis of a catalyst component]

(1,2'-dimethylsilylene)(2,1'-dimethylsilylene)bis(3-trimethylsilylmethyl-indenyl)zirconium dichloride]

Under the stream of nitrogen, in a 200 ml-Schrlnk bottle, 50 ml of ether and 3.5g (10.2 mmol) of (1,2-dimethylsilylene)(2,1'-dimethylsilylene)bisindene were added. To the resulting mixture, a hexane solution (1.60 mol/l, 12.8 ml) of n-butyllithium (n-BuLi) was added dropwise at -78°C. After stirring at room temperature for 8 hours, the solvent was distilled off, and the resulting solids were dried under reduced pressure to obtain 5.0g of white solids.

These solids were dissolved in 50 ml of tetrahydrofuran (THF). To the resulting solution, 1.4 ml of iodomethyltrimethylsilane was added dropwise at room temperature. Hydrolysis was conducted with 10 mml of water, and an organic phase was extracted with 50 ml of ether. The organic phase was then dried and the solvent was distilled off. To the resultant, 50 ml of ether was added. A hexane solution of n-BuLi (1.6 mol/l, 12.4 ml) was added dropwise at -78°C. Then, the temperature of the solution was raised to room temperature, stirred for 3 hours, and then the ether was distilled off.

The resulting solids were washed with 30 ml of hexane and then dried under reduced pressure. 5.11g of these white solids were suspended in 50 ml of toluene. 2.0g (8.60 mmol) of zirconium tetrachloride suspended in 10 ml of toluene in another Schrenk bottle was added. After stirring for 12 hours at room temperature, the solvent was distilled off, and the residues were washed with 50 ml of hexane, and then recrystallized from 30 ml of dichloromethane, whereby 1.2g (yield: 25%) of intended yellowish fine crystals were obtained.

Production Example 2

[Synthesis of (1,1'-$SiMe_2$)(2,2'-$SiMe_2SiMe_2$)bis(indenyl)zirconium dichloride]

Under the nitrogen stream, 2.5g of magnesium and 100 ml of THF were incorporated in a 300 ml-three neck flask, and a piece of iodine (about 5 mg) was added. To the resultant, 5.0g (25.6 mmol) of 2-bromoindene dissolved in 40 ml of THF was added dropwise from a dropping funnel. After the completion of the dropwise addition, stirring was further conducted at room temperature for 2 hours. Thereafter, 1.33g (7.1 mmol) of 1,2-dichlorotetramethyldisilane was added dropwise. After stirring at room temperature for overnight, the solvent was distilled off and the residues were extracted with 50 ml of hexane. As a result, 2.03 g (yield: 82%) of 1,2-bis(indenyl)tetramethyldisilane was obtained as a pale yellow oily product.

This oily product was dissolved in 30 ml of ether, and an n-hexane solution of n-butyllithium (n-BuLi) (1.52 mol/l, 7.8 ml) was added at -78°C. After stirring for overnight at room temperature, the supernatant was filtered out. The resulting white solids were washed with hexane, dried under reduced pressure to obtain dilithium salts.
These salts were dissolved in 20 ml of THF, and 0.3 ml of dichlorodimethylsilane was added dropwise. After stirring for 3 hours at room temperature, the solvent was removed, and the residues were extracted with 30 ml of hexane. After distilling the solvent off, 1.26g of (1,1'-$SiMe_2$)(2,2'-$SiMe_2SiMe_2$)bis(indene) was obtained.

This was dissolved in 20 ml of ether, and an n-hexane solution (1.52 mol/l, 3.3 ml) of n-BuLi was added dropwise at -78°C. After stirring for overnight at room temperature, the supernatant was filtered out. The resulting white precipitates were dried under reduced pressure to obtain 0.99g of dilithium salts. These salts were suspended in 10 ml of toluene, and 0.47g (2.0 mmol) of zirconium tetrachloride suspended in 10 ml of toluene was added at -78°C. After stirring for overnight at room temperature, the supernatant was filtered out. The supernatant was concentrated to one-third, cooled to -20°C and reserved. As a result, yellow powder was precipitated (yield: 25%).

$^1$H-NMR (90MHz, $CDCl_3$): $\delta$-0.53, 0.76, 0.82, 1.02 (s, -SiMe2-, 18H); 6.47 (s, CH, 2H); 7.0-7.8 (m, ArH, 8H)

Example 1

[Production of 1-octene homopolymer (I)]

In a stainless-made autoclave having an internal volume of 1 L which had been dried by heating, 400 mL of 1-octene, 1 mmol of triisobutylaluminum, 3 μmol of methylaniliniumtetrakis(perfluorophenyl)borate, and 1 μmol of (1,2'-dimethylsilylene)(2,1'-dimethylsilylene)bis(3-trimethylsilylmethyl-indenyl)zirconium dichloride produced in Production Example 1 was incorporated.

Further, hydrogen was incorporated to 0.05 MPa. Thereafter, the temperature was raised to 90°C, and polymerization was conducted for 2 hours. After completion of the polymerization, 5 ml of methanol was incorporated, and depressurization was conducted. Thereafter, the reaction solution was taken out and dried under reduced pressure to obtain 200 g of a homopolymer of 1-octene. The results of measuring the properties are shown in Table 1.

[Production of decomposed product (I-a) of 1-octene homopolymer]

In a separable SUS-made reactor (internal volume: 500 ml) provided with a thermometer, a stirrer and a mantle heater, 90g of the 1-octene homopolymer (I) prepared above was charged. While stirring at a rotational speed of 50 rpm, the temperature was raised to 190°C in the nitrogen atmosphere.
Subsequently, 1.8g of Perhexa 25B (manufactured by Nippon Oil & Fats Co., Ltd.) (2,5-dimethyl-2,5-di(t-butylperoxy) hexane) was added dropwise slowly over 20 minutes under the stream of nitrogen. After the dropwise addition, stirring was conducted for further 30 minutes while keeping the temperature at 190°C. By naturally cooling to room temperature, an intended decomposed polymer (I-a) was obtained. The results of measuring the physical properties are shown in Table 1. The average carbon-atom number of the α-olefin of the polymer decomposed product was the same as that of the polymer before decomposition.

Example 2

[Production of 1-decene homopolymer (II)]

Polymerization was conducted in the same manner as in Example 1, except that 1-decene was used instead of 1-octene and the temperature after the incorporation of hydrogen was set to 50°C, whereby 180g of a 1-decene homopolymer (II) was obtained. The results of measuring the physical properties are shown in Table 1.

[Production of decomposed product (II-a) of 1-decene homopolymer]

In a separable SUS-made reactor (internal volume: 500 ml) provided with a thermometer, a stirrer and a mantle heater, 140g of the 1-decene homopolymer (II) prepared above was charged. While stirring at a rotational speed of 50 rpm, the polymer was heated to 170°C in the nitrogen atmosphere.
Then, 2.1g of Perhexa HC (manufactured by Nippon Oil & Fats Co., Ltd.) (1,1-di(t-hexylperoxy)cyclohexane) was added dropwise slowly under the nitrogen stream over 10 minutes. After the dropwise addition, stirring was continued while keeping the temperature at 170°C for further 30 minutes. By naturally cooling to room temperature, an intended decomposed polymer (II-a) was obtained. The results of measuring the physical properties are shown in Table 1.

Example 3

[Production of 1-dodecene homopolymer (III)]

190g of a 1-dodecene homopolymer (III) was obtained in the same manner as in the "production of 1-decene homopolymer (II)" in Example 2, except that the 1-dodecene was used instead of the 1-decene. The results of measuring the properties are shown in Table 1.

[Production of decomposed product (III-a) of 1-dodecene homopolymer]

A 1-dodecene homopolymer (III-a) was obtained in the same manner as in the "production of decomposed product (II-a) of 1-decene homopolymer" in Example 2, except that 1-dodecene homopolymer (III) was used instead of 1-decene homopolymer (II). The results of measuring the properties are shown in Table 1.

Example 4

[Production of 1-tetradecene homopolymer (IV)]

180g of a 1-tetradecene homopolymer (IV) was obtained in the same manner as in the "production of 1-octene homopolymer (I)" in Example 1, except that 1-tetradecene was used instead of 1-octene. The results of measuring the properties are shown in Table 1.

[Production of decomposed product (IV-a) of 1-tetradecene homopolymer]

In a separable SUS-made reactor (internal volume: 500 ml) provided with a thermometer, a stirrer and a mantle heater, 180g of 1-tetradecene homopolymer (IV) prepared above was charged. While stirring at a rotational speed of 50 rpm, the polymer was heated to 180°C in the nitrogen atmosphere. Then, 2.7g of Perhexa HC (manufactured by Nippon Oil & Fats Co., Ltd.) was added dropwise slowly in the nitrogen atmosphere over 10 minutes. After the dropwise addition, stirring was continued while keeping the temperature at 180°C for further 30 minutes. By naturally cooling to room temperature, an intended decomposed polymer (IV-a) was obtained. The results of measuring the physical properties are shown in Table 1.

Example 5

[Production of 1-tetradecene/propylene copolymer (V)]

In a stainless-made autoclave having an internal volume of 1 L which had been dried by heating, 400 mL of 1-tetradecene, 1 mmol of triisobutylaluminum, 3 μmol of methylaniliumtetrakis(perfluorophenyl)borate, and 1 μmol of (1,2'-dimethylsilylene)(2,1'-dimethylsilylene)-bis(3-trimethylsilylmethyl-indenyl)zirconium dichloride prepared in Production Example 1 was incorporated.

Further, hydrogen was incorporated to 0.05 MPa. Thereafter, the temperature was raised to 90°C, and at the same time, the pressure of propylene was increased to 0.15 MPaG. While keeping the pressure at constant with propylene, polymerization was conducted for 1 hour. After completion of the polymerization, 5 ml of methanol was incorporated, and depressurization was conducted. Thereafter, the reaction solution was taken out and dried under reduced pressure to obtain 210 g of a 1-tetradecene/propylene copolymer. The results of measuring the properties are shown in Table 1.

[Production of decomposed product (V-a) of 1-tetradecene/propylene copolymer]

In a separable SUS-made reactor (internal volume: 500 ml) provided with a thermometer, a stirrer and a mantle heater, 120g of the 1-tetradecene/propylene copolymer (V) prepared above was charged. While stirring at a rotational speed of 50 rpm, the polymer was heated to 180°C in the nitrogen atmosphere. Then, 1.8g of Perhexa HC (manufactured by Nippon Oil & Fats Co., Ltd.) was added dropwise slowly under the stream of nitrogen over 10 minutes. After the dropwise addition, stirring was continued while keeping the temperature at 180°C for further 30 minutes. By naturally cooling to room temperature, an intended decomposed polymer (V-a) was obtained. The results of measuring the physical properties are shown in Table 1.

Comparative Example 1

[Production of 1-hexadecene polymer (VI)]

In a stainless-made autoclave having an internal volume of 1 L which had been dried by heating, 400 mL of 1-hexadecene, 1 mmol of triisobutylaluminum, 8 μmol of methylaniliumtetrakis(perfluorophenyl)borate and 2 μmol of (1,2'-dimethylsilylene)(2,1'-dimethylsilylene)-bis(3-trimethylsilylmethyl-indenyl)zirconium dichloride prepared in Production Example 1 were incorporated.

Further, hydrogen was incorporated to 0.15 MPa. Thereafter, the temperature was raised to 100°C, and polymerization was conducted for 2 hours. After completion of the polymerization, 5 ml of methanol was incorporated, and depressurization was conducted. Thereafter, the reaction solution was taken out and dried under reduced pressure to obtain 180 g of a 1-hexadecene polymer (VI). The results of measuring the properties are shown in Table 1.

[Production of decomposed product (VI-a) of 1-hexadecene polymer]

In a separable SUS-made reactor (internal volume: 500 ml) provided with a thermometer, a stirrer and a mantle

heater, 120g of the 1-hexadecene polymer (VI) prepared above was charged. While stirring at a rotational speed of 50 rpm, the polymer was heated to 180°C in the nitrogen atmosphere. Then, 1.8g of Perhexa HC (manufactured by Nippon Oil & Fats Co., Ltd.) was added dropwise slowly under the nitrogen stream over 10 minutes. After the dropwise addition, stirring was continued while keeping the temperature at 180°C for further 30 minutes. In this state, a large amount of a gel-like mass was generated.

Comparative Example 2

[Production of α-olefin copolymer (VII) having 20 to 24 carbon atoms]

In a stainless-made autoclave having an internal volume of 1 L which had been dried by heating, 400 ml of "linearlene 2024" manufactured by Idemitsu Kosan Co. Ltd., 1 mmol of triisobutylaluminum, 8 μmol of methylanilinium tetrakis(perfluorophenyl)borate and 2 μmol of (1,2'-dimethylsilylene)(2,1'dimethylsilylene)-bis(3-trimethylsilylmethylindenyl)zirconium dichloride prepared in Production Example 1 were incorporated.
Further, hydrogen was incorporated to 0.15 MPa, and the temperature was raised to 110°C, followed by polymerization for 3 hours. After completion of the polymerization, 5 ml of methanol was incorporated, and depressurization was conducted. Thereafter, the reaction solution was taken out and dried under reduced pressure to obtain 150g of an α-olefin copolymer having 20 to 24 carbon atoms. The results of measuring the properties are shown in Table 1.

[Production of decomposed product (VII-a) of an α-olefin copolymer having 20 to 24 carbon atoms]

In a separable SUS-made reactor (internal volume: 500 ml) provided with a thermometer, a stirrer and a mantle heater, 120g of the 1-tetradecene/propylene copolymer (VII) prepared above was charged. While stirring at a rotational speed of 50 rpm, the polymer was heated to 180°C in the nitrogen atmosphere. Then, 1.8g of Perhexa HC (manufactured by Nippon Oil & Fats Co., Ltd.) was added dropwise slowly under the nitrogen stream over 10 minutes. After the dropwise addition, stirring was continued while keeping the temperature at 180°C for further 30 minutes. In this state, a large amount of a gel-like mass was generated.

Table 1

| | Ex. 1 | Ex. 2 | Ex. 3 | Ex. 4 | Ex. 5 | Com. Ex. 1 | Com. Ex. 2 |
|---|---|---|---|---|---|---|---|
| Polymer | I | II | III | IV | V | VI | VII |
| Average carbon-atom number | 8 | 10 | 12 | 14 | 10.2 | 16 | 21.1 |
| [mm] | 61 | 63 | 62 | 62 | 55 | 64 | 67 |
| B viscosity (100°C) | 40000 | 47000 | 35000 | 11000 | 3300 | 200 | 130 |
| Mw | 603600 | 705000 | 531400 | 184900 | 73700 | 19900 | 19200 |
| Mw/Mn | 2.2 | 2.1 | 1.9 | 2.0 | 2.1 | 2.2 | 2.3 |
| $\log_{10}M1$ | 4.42 | 4.56 | 3.74 | 3.74 | 3.20 | 2.99 | 2.98 |
| $\log_{10}M2$ | 6.45 | 6.81 | 6.40 | 6.16 | 6.08 | 6.05 | 6.05 |
| $\log_{10}Mp$ | 5.46 | 5.72 | 5.13 | 5.00 | 4.71 | 4.55 | 4.57 |
| $(\log_{10}Mp-\log_{10}M1)-(\log_{10}M2-\log_{10}M_p)$ | 0.04 | 0.07 | 0.12 | 0.09 | 0.13 | 0.06 | 0.10 |
| | | | | | | | |

(continued)

| Polymer | I-a | II-a | III-a | IV-a | V-a | VI | VII |
|---|---|---|---|---|---|---|---|
| [mm] | 61 | 63 | 62 | 62 | 55 | Unmeasurable | Unmeasurable |
| B viscosity (100°C) | 640 | 5600 | 21000 | 10000 | 2100 | | |
| Mw | 35300 | 106900 | 329300 | 170500 | 56400 | | |
| Mw/Mn | 1.5 | 1.7 | 1.8 | 1.9 | 1.8 | | |
| $log_{10}M1$ | 3.02 | 3.36 | 4.44 | 3.67 | 3.12 | | |
| $log_{10}M2$ | 6.06 | 6.11 | 6.26 | 6.15 | 3.02 | | |
| $log_{10}Mp$ | 4.67 | 5.00 | 5.53 | 5.22 | 3.23 | | |
| $(log_{10}Mp-log_{10}M1)-(log_{10}M2-log_{10}MP)$ | 0.26 | 0.53 | 0.35 | 0.61 | 0.32 | | |
| Melting point (°C) | None | None | None | 10 | None | - | - |

Comparative Example 3

[Production of 1-decene low-molecular product (VIII)]

In a stainless-made autoclave having an internal volume of 1 L which had been dried by heating, 400 mL of 1-decene, 1 mmol of triisobutylaluminum, 3 μmol of methylaniliumtetrakis(perfluorophenyl)borate and 1 μmol of (1,2'-dimethylsilylene)(2,1'-dimethylsilylene)-bis(3-trimethylsilylmethylindenyl) zirconium dichloride produced in Production Example 1 were incorporated.
Further, hydrogen was incorporated to 0.05 MPa, and the temperature was raised to 80°C, followed by polymerization for 2 hours. After completion of the polymerization, 5 ml of methanol was incorporated, and depressurization was conducted. Thereafter, the reaction solution was taken out and dried under reduced pressure to obtain 185g of a 1-decene homopolymer (VIII). The results of measuring the properties are shown in Table 2.

Evaluation Example 1

[Measurement of heat stability]

In two petri dishes each having a dimension of Φ 32 × 15 mm, two kinds of the decomposed product of 1-decene polymer obtained in Example 2 and Comparative Example 3 (II-a and VIII), the decomposed product of 1-dodecene polymer (III-a) obtained in Example 3 and the decomposed product of 1-tetradecene/propylene copolymer (V-a) obtained in Example 5 were placed in an amount of about 1 g, and the dishes were set in a gas tube oven (GTO-350D, manufactured by Shibata Scientific Technology Ltd.). Heating was conducted in the air at 250°C for 30 minutes, and the GPC of the resulting sample was measured. The heat stability was evaluated by the molecular weight retention ratio, and the molecular weight retention ratio was obtained by the following formula. The measurement results are shown in Table 2.

$$\text{Molecular weight retention ratio} = (\text{Mw before heat treatment}/\text{Mw after heat treatment}) \times 100$$

Table 2

| | Ex. 2 | | Ex. 3 | | Ex. 5 | | Com. Ex. 3 | |
|---|---|---|---|---|---|---|---|---|
| Polymer | II-a | | IV-a | | V-a | | VIII | |
| Average carbon-atom number | 10 | | | | | | | |
| Heat treatment | × | ○ | × | ○ | × | ○ | × | ○ |

(continued)

| | Ex. 2 | | Ex. 3 | | Ex. 5 | | Com. Ex. 3 | |
|---|---|---|---|---|---|---|---|---|
| Polymer | II-a | | IV-a | | V-a | | VIII | |
| Mw | 106900 | 73500 | 170500 | 142000 | 56400 | 53580 | 88500 | 51500 |
| Mw/Mn | 1.7 | - | 1.9 | - | 1.8 | - | 2.1 | - |
| $log_{10}M1$ | 3.36 | - | 3.67 | - | 3.12 | - | 3.29 | - |
| $log_{10}M2$ | 6.11 | - | 6.15 | - | 3.02 | - | 6.15 | - |
| $log_{10}Mp$ | 5.00 | - | 5.22 | - | 3.23 | - | 4.79 | - |
| $(log_{10}M_P-log_{10}M1)-(log_{10}M2-log_{10}Mp)$ | 0.53 | - | 0.61 | - | 0.32 | - | 0.14 | - |
| Molecular weight retention ratio | 68.8 | | 83.3 | | 95.0 | | 58.2 | |
| ○ : Conducted<br>× : Not conducted | | | | | | | | |

Example 6

[Production of decomposed product (IV-b) of 1-tetradecene homopolymer]

In a separable SUS-made reactor (internal volume: 500 ml) provided with a thermometer, a stirrer and a mantle heater, 175g of the 1-tetradecene homopolymer (IV) prepared in Example 4 was charged. While stirring at a rotational speed of 50 rpm, the polymer was heated to 180°C in the nitrogen atmosphere.

Then, a dilution of a peroxide obtained by mixing in advance 2.7g of Perhexa HC (manufactured by Nippon Oil & Fats Co., Ltd.) in 5g of 1-tetradecene homopolymer (IV) was added dropwise slowly under the nitrogen stream over 10 minutes. After the dropwise addition, stirring was continued while keeping the temperature at 180°C for further 30 minutes. By naturally cooling to room temperature, an intended decomposed polymer was obtained. The results of measuring the physical properties are shown in Table 3.

The decomposition conditions are the same as in Example 4, except that the peroxide was diluted with a raw material polymer. However, it could be confirmed that the decomposition proceeded faster than Example 4.

Table 3

| | Ex. 6 |
|---|---|
| Polymer | IV-b |
| [mm] | 62 |
| B viscosity (100°C) | 8500 |
| Mw | 9100 |
| Mw/Mn | 1.8 |
| $log_{10}M1$ | 3.41 |
| $log_{10}M2$ | 6.12 |
| $log_{10}Mp$ | 5.02 |
| $(log_{10}Mp-log_{10}M1)-(log_{10}M2-log_{10}Mp)$ | 0.61 |
| Melting point (°C) | 10 |

Example 7

[Production of 1-hexene homopolymer (IX)]

In a stainless-made autoclave having an internal volume of 1 L which had been dried by heating, 400 mL of 1-hexene, 1 mmol of triisobutylaluminum, 8 μmol of dimethylaniliniumtetrakis(pentafluorophenyl)borate and 2 μmol of (1,1'-$SiMe_2$)(2,2'-$SiMe_2SiMe_2$)bis(indenyl)zirconium dichloride prepared in Production Example 2 were incorporated.

Further, hydrogen was incorporated to 0.15 MPa, and the temperature was raised to 60°C, followed by polymerization for 2 hours. After completion of the polymerization, 5 ml of methanol was incorporated, and depressurization was conducted. Thereafter, the reaction solution was taken out and dried under reduced pressure to obtain 195g of 1-hexene homopolymer (IX). The results of measuring the properties are shown in Table 4.

[Production of decomposed product (IX-a) of 1-hexene homopolymer]

In a separable SUS-made reactor (internal volume: 500 ml) provided with a thermometer, a stirrer and a mantle heater, 90g of the 1-hexene homopolymer (IX) prepared above was charged. While stirring at a rotational speed of 50 rpm, the polymer was heated to 250°C in the nitrogen atmosphere.
Then, 1.8g of Perhexa 25B (manufactured by Nippon Oil & Fats Co., Ltd.) was added dropwise slowly under the nitrogen stream over 20 minutes. After the dropwise addition, stirring was continued while keeping the temperature at 250°C for further 30 minutes. By naturally cooling to room temperature, an intended decomposed polymer was obtained. The results of measuring the physical properties are shown in Table 4. The average carbon-atom number of the α-olefin of the decomposed product of the polymer was the same as that of the polymer before decomposition.

Example 8

[Production of 1-hexene/1-dodecene copolymer (X)]

In a stainless-made autoclave having an internal volume of 1 L which had been dried by heating, 200 mL of 1-hexene, 200 mL of 1-dodecene, 1 mmol of triisobutylaluminum, 4 μmol of dimethylaniliniumtetrakis(pentafluorophenyl) borate, and 1 μmol of (1,1'-$SiMe_2$)(2,2'-$SiMe_2$SiMe2)bis(indenyl)zirconium dichloride prepared in Production Example 2 were incorporated.
Further, hydrogen was incorporated to 0.15 MPa, and the temperature was raised to 80°C, followed by polymerization for 2 hours. After completion of the polymerization, 5 ml of methanol was incorporated, and depressurization was conducted. Thereafter, the reaction solution was taken out and dried under reduced pressure to obtain 179g of a 1-hexane/1-dodecene copolymer (X). The results of measuring the properties are shown in Table 4.

[Production of decomposed product (X-a) of 1-hexene/1-dodecene]

In a separable SUS-made reactor (internal volume: 500 ml) provided with a thermometer, a stirrer and a mantle heater, 90g of a 1-hexene/1-dodecene copolymer (X) prepared above was charged. While stirring at a rotational speed of 50 rpm, the polymer was heated to 250°C in the nitrogen atmosphere.
Then, 1.8g of Perhexa 25B (manufactured by Nippon Oil & Fats Co., Ltd.) was added dropwise slowly under the nitrogen stream over 20 minutes. After the dropwise addition, stirring was continued while keeping the temperature at 250°C for further 30 minutes. By naturally cooling to room temperature, an intended decomposed polymer (X-a) was obtained. The results of measuring the physical properties are shown in Table 4. The average carbon-atom number of the α-olefin of the decomposed product of the polymer was the same as that of the polymer before decomposition.

Example 9

[Production of 1-butene/1-dodecene copolymer (XI)]

In a stainless-made autoclave having an internal volume of 1 L which had been dried by heating, 200 mL of 1-butene, 200 mL of 1-dodecene, 1 mmol of triisobutylaluminum, 4 μmol of dimethylaniliniumtetrakis(pentafluorophenyl) borate, and 1 μmol of (1,1'-$SiMe_2$)(2,2'-$SiMe_2SiMe_2$)bis(indenyl)zirconium dichloride prepared in Production Example 2 were incorporated.
Further, hydrogen was incorporated to 0.15 MPa, and the temperature was raised to 80°C, followed by polymerization for 2 hours. After completion of the polymerization, 5 ml of methanol was incorporated, and depressurization was conducted. Thereafter, the reaction solution was taken out and dried under reduced pressure to obtain 201g of a 1-butene/1-dodecene copolymer (XI). The results of measuring the properties are shown in Table 4.

[Production of decomposed product (XI-a) of 1-butene/1-dodecene copolymer]

In a separable SUS-made reactor (internal volume: 500 ml) provided with a thermometer, a stirrer and a mantle heater, 90g of the 1-butene/1-dodecene copolymer (XI) prepared above was charged. While stirring at a rotational speed of 50 rpm, the polymer was heated to 250°C in the nitrogen atmosphere.
Then, 1.8g of Perhexa 25B (manufactured by Nippon Oil & Fats Co., Ltd.) was added dropwise slowly under the nitrogen stream over 20 minutes. After the dropwise addition, stirring was continued while keeping the temperature at 250°C for further 30 minutes. By naturally cooling to room temperature, an intended decomposed polymer (XI-a) was obtained. The results of measuring the physical properties are shown in Table 4. The average carbon-atom number of the α-olefin of the decomposed product of the polymer was the same as that of the polymer before decomposition.
Table 4

| | Ex. 7 | Ex. 8 | Ex. 9 |
|---|---|---|---|
| Polymer | IX | X | XI |
| Average carbon-atom number | 6 | 9 | 8 |
| [mm] | 31.2 | 32.5 | 34.3 |
| B viscosity (100°C) | 150 | 62 | 230 |
| Mw | 19000 | 8600 | 26000 |
| Mw/Mn | 2.1 | 1.7 | 2.3 |
| $\log_{10}M1$ | 2.98 | 2.87 | 3.05 |
| $\log_{10}M2$ | 5.02 | 4.62 | 5.23 |
| $\log_{10}Mp$ | 4.09 | 3.81 | 4.21 |
| $(\log_{10}Mp-\log_{10}M1)-(\log_{10}M2-\log_{10}Mp)$ | 0.18 | 0.13 | 0.14 |
| Decomposed product of polymer | IX-a | X-a | XI-a |
| [mm] | 31.2 | 32.5 | 34.3 |
| B viscosity (100°C) | 72 | 43 | 110 |
| Mw | 9400 | 5500 | 14000 |
| Mw/Mn | 1.6 | 1.4 | 1.9 |
| $\log_{10}M1$ | 2.98 | 2.55 | 2.83 |
| $\log_{10}M2$ | 4.63 | 4.36 | 4.9 |
| $\log_{10}Mp$ | 3.92 | 3.68 | 4.15 |
| $(\log_{10}Mp-\log_{10}M1)-(\log_{10}M2-\log_{10}Mp)$ | 0.23 | 0.68 | 0.57 |
| Melting point (°C) | None | None | None |

Example 10

[Production of hydrogenated product of decomposed product (II-a) of 1-decene homopolymer]

A heat treated product (100g) of the polymer obtained in Example 2 was charged in a stainless-made autoclave having an internal volume of 1 l. After adding a stabilized nickel catalyst (SN750, manufactured by Sakai Chemical Industry, Co., Ltd.) at a weight ratio of 1 wt%, in the hydrogen atmosphere of 1 MPa, a reaction was conducted at 130°C for 6 hours. After completion of the reaction, the temperature was lowered to around 80°C, the contents were taken out, and catalyst components were separated by filtration by means of a 1 μ-filter, whereby a hydrogenated product (100g) was obtained.
The bromine value of the hydrogenated product was measured and confirmed to be 0.02.

INDUSTRIAL APPLICABILITY

The polymer of the invention can be used in toner, lubricant, ink or the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification are incorporated herein by reference in its entirety.

## Claims

**1.** An α-olefin polymer satisfying the following (1) to (4):

(1) the average carbon-atom number of α-olefins constituting the polymer is 6.0 or more and 14 or less;
(2) the molecular weight distribution (Mw/Mn)≦2.0;
(3) 3000≦weight average molecular weight (Mw)≦600000; and
(4) $(Log_{10}Mp-Log_{10}M1) - (Log_{10}M2-Log_{10}Mp) \geqq 0.2$; wherein, in a chart measured by gel permeation chromatography, M1 is the molecular weight at the starting point of the peak, Mp is the molecular weight at the peak top; and M2 is the molecular weight at the end point of the peak.

**2.** The polymer according to claim 1 which further satisfies the following (5):

(5) no melting point is observed or a melting point of 100°C or less is observed in differential scanning calorimetry.

**3.** A hydrogenated product of an α-olefin polymer satisfying the following (1) to (4) and (6):

(1) the average carbon-atom number of α-olefins constituting the polymer is 6.0 or more and 14 or less;
(2) the molecular weight distribution (Mw/Mn)≦2.0;
(3) 3000≦weight average molecular weight (Mw)≦600000;
(4) $(Log_{10}Mp-Log_{10}M1) - (Log_{10}M2-Log_{10}Mp) \geqq 0.2$; wherein, in a chart measured by gel permeation chromatography, M1 is the molecular weight at the starting point of the peak, Mp is the molecular weight at the peak top; and M2 is the molecular weight at the end point of the peak; and
(6) bromine value≦2.0.

**4.** A method for producing the polymer according to claim 1 or 2, which comprises decomposing a raw material polymer in the presence of an organic peroxide in an inert gas atmosphere at 300°C or less, the raw material polymer being a polymer of one or more α-olefins selected from α-olefins having 3 to 32 carbon atoms, and the average carbon-atom number of the α-olefins being 6.0 or more and 14 or less.

**5.** A method for producing the hydrogenated product of an α-olefin polymer according to claim 3, which comprises:

decomposing a raw material polymer in the presence of an organic peroxide in an inert gas atmosphere at 300°C or less, the raw material polymer being a polymer of one or more α-olefins selected from α-olefins having 3 to 32 carbon atoms, and the average carbon-atom number of the α-olefins being 6.0 or more and 14 or less; and hydrogenating.

**6.** The production method according to claim 4 or 5, wherein a dilution of the organic peroxide with the raw material polymer is used.

**7.** A toner obtained by using the α-olefin polymer or the hydrogenated product of an α-olefin polymer according to any of claims 1 to 3.

**8.** A lubricant obtained by using the α-olefin polymer or the hydrogenated product of an α-olefin polymer according to any of claims 1 to 3.

**9.** An ink obtained by using the α-olefin polymer or the hydrogenated product of an α-olefin polymer according to any of claims 1 to 3.

**INTERNATIONAL SEARCH REPORT**

International application No.
PCT/JP2011/006529

A. CLASSIFICATION OF SUBJECT MATTER
*C08F10/14*(2006.01)i, *C08F8/04*(2006.01)i, *C08F8/50*(2006.01)i, *C09D11/00*(2006.01)i, *C10M107/02*(2006.01)i, *C10M143/00*(2006.01)i, *G03G9/08*(2006.01)i

According to International Patent Classification (IPC) or to both national classification and IPC

B. FIELDS SEARCHED

Minimum documentation searched (classification system followed by classification symbols)
C08F10/14, C08F8/04, C08F8/50, C09D11/00, C10M107/02, C10M143/00, G03G9/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 09-104720 A (Tosoh Corp.), 22 April 1997 (22.04.1997), entire text (Family: none) | 1-9 |
| A | WO 2010/117028 A1 (Idemitsu Kosan Co., Ltd.), 14 October 2010 (14.10.2010), entire text (Family: none) | 1-9 |
| A | JP 2009-057573 A (Idemitsu Kosan Co., Ltd.), 19 March 2009 (19.03.2009), entire text (Family: none) | 1-9 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 February, 2012 (22.02.12) | 06 March, 2012 (06.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08230116 A
- JP H07308967 A
- JP H0733916 A
- JP H06057728 A
- JP H04139245 A
- JP H03287608 A
- JP 2011016893 A
- JP 2009161752 A
- WO 2010074233 A


### Non-patent literature cited in the description


- **T. ASAKURA ; M. DEMURA ; Y. NISHIYAMA.** *Macromolecules,* 1991, vol. 24, 2334